# EUROPÄISCHE PATENTANMELDUNG

(11) **EP 4 827 109 A1**
(43) Veröffentlichungstag der Anmeldung: **21.10.2026**
(21) Anmeldenummer: 26171383.8
(22) Anmeldetag: 09.04.2026
(51) Int. Cl.: H04Q 1/06

(54) **SYSTEM ZUR KLEMMUNG VON ROHREN IN VERTEILERSCHRÄNKEN**

(30) Priorität: 09.04.2025 DE 102025001202
(71) Anmelder: ZNC Fiber GmbH, 44149 Dortmund (DE)
(72) Erfinder: Haake, Matthias, 44149 Dortmund (DE)
(74) Vertreter: Geskes, Christoph

(57) **Zusammenfassung**

Zur Lösung der Aufgabe, eine Montage insbesondere von Leerrohren, insbesondere in Netzverteilerschränken, zu erleichtern wird ein System (10) zur Klemmung von Rohren in Verteilerschränken, insbesondere im Bereich der Telekommunikation, vorgeschlagen, umfassend mindestens eine Rohrklemmleiste (20) mit einer ersten Wandung (22) und einer mit der ersten Wandung (22) im Wesentlichen rechtwinklig verbundenen weiteren Wandung (26), wobei die erste Wandung (22) eine Mehrzahl von zur Aufnahme von Rohren ausgebildete erste Ausschnitte (34) aufweiset, wobei die ersten Ausschnitte (34) von einer ersten Endkante (28) der ersten Wandung (22) ausgehend in dieser ausgebildet sind, wobei mindestens einem ersten Ausschnitt (34) in der ersten Wandung (22) eine Ausnehmung (32, 32') zugeordnet ist, die zwischen dem ersten Ausschnitt (34) und der weiteren Wandung (26) oder im Wesentlichen unmittelbar angrenzend an die weitere Wandung (26) oder zwischen ersten Ausschnitten (34) in der ersten Wandung (22) angeordnet ist, das System (10) weiterhin umfassend mindestens ein Mittel zur Reduzierung (40) einer Weite W1 eines ersten Ausschnitts (34) der Rohrklemmleiste (10) mit einem Eingriffschenkel (42), der in der Ausnehmung (32, 32') anordenbar ist, und mit einem Reduzierschenkel (44), wobei Eingriffschenkel (42) und Reduzierschenkel (44) im Wesentlichen L-förmig zueinander ausgebildet sind, wobei der Reduzierschenkel (44) eine Vorderkante (46) aufweist, von der ausgehend ein zweiter Ausschnitt (48) ausgebildet ist, der im Wesentlichen einem ersten Ausschnitt (34) der Rohrklemmleiste (20) nachgebildet und einem solchen zuordenbar ist und eine geringere Weite W2 als der erste Ausschnitt (34) aufweist, so dass Rohre in dem ersten und dem zweiten Ausschnitt (34, 48) aufnehmbar sind.

## Beschreibung

Die vorliegende Erfindung betrifft ein System zur Klemmung von Rohren in Verteilerschränken, insbesondere im Bereich der Telekommunikation, umfassend mindestens eine Rohrklemmleiste mit einer ersten Wandung und einer mit der ersten Wandung im Wesentlichen rechtwinklig verbundenen weiteren Wandung, wobei die erste Wandung eine Mehrzahl von zur Aufnahme von Rohren ausgebildete erste Ausschnitte aufweisen.

Im Zuge des Ausbaus von Telekommunikationsnetzen, insbesondere solchen, die auf Glasfasern basieren, ist es notwendig, Netzverteilerschränke und sonstige Verteilerschränke vorzusehen, in welche eine Verteilung der im Boden verlegten Telekommunikationskabel auf beispielsweise eine Mehrzahl von Anschlüssen erfolgt. Dabei treten in aller Regel über den Boden des Verteilerschrankes die bodenverlegten Telekommunikationskabel in den Innenraum desselben ein und werden innerhalb des Verteilerschrankes nach oben geführt. Dabei werden die Telekommunikationskabel in Leerrohren, die auch einen mechanischen Schutz vermitteln, geführt. Diese Leerrohre werden in einer Mehrzahl im Inneren des Verteilerschrankes angeordneten Rohrklemmleisten eingeklemmt und erleichtern so die weitere Arbeit im Inneren des Verteilerschrankes, beispielsweise im Zusammenhang mit der Verteilung von Telekommunikationsanschlüssen in einem Wohngebiet oder Bürohaus.

Allerdings weisen die in der Regel die von unterschiedlichen Telekommunikationsanbietern verwendeten Leerrohre, oder solche, welche von den eine Erdverlegung der Telekommunikationskabel vornehmenden Unternehmen verwendet werden, oftmals unterschiedliche Außendurchmesser auf. Schon bei geringen Abweichungen können dann je nach eingesetzter Rohrklemmleiste Leerrohre nicht mehr hinreichend fest in dieser eingeklemmt werden. Oftmals behilft sich eine Montageperson beispielsweise durch Einsatz von Klebebändern oder Klebestreifen oder aber von Keilen oder ähnlichem, um eine sichere Klemmung des Leerrohres in der Rohrklemmleiste zu vermitteln.

Aufgabe der vorliegenden Erfindung ist es, eine vereinfachte Montage von Leerrohren insbesondere in Verteilerschränken zu ermöglichen, mit welcher auch Leerrohre mit einem unterschiedlichen Außendurchmesser sicher geklemmt werden können.

Diese Aufgabe wird gelöst durch ein wie eingangs beschriebenes System, wobei die ersten Ausschnitte von einer ersten Endkante der ersten Wandung ausgehend in dieser ausgebildet sind, wobei mindestens einem ersten Ausschnitt in der ersten Wandung eine Ausnehmung zugeordnet ist, die zwischen dem ersten Ausschnitt und der weiteren Wandung oder im Wesentlichen unmittelbar angrenzend an die weitere Wandung oder zwischen ersten Ausschnitten in der ersten Wandung angeordnet ist, das System weiterhin umfassend mindestens ein Mittel zur Reduzierung einer Weite W1 eines ersten Ausschnitts der Rohrklemmleiste mit einem Eingriffschenkel, der in der Ausnehmung anordenbar ist, und mit einem Reduzierschenkel , wobei Eingriffschenkel und Reduzierschenkel im Wesentlichen L-förmig zueinander ausgebildet sind, wobei der Reduzierschenkel eine Vorderkante aufweist, von der ausgehend ein zweiter Ausschnitt ausgebildet ist, der im Wesentlichen einem ersten Ausschnitt der Rohrklemmleiste nachgebildet und einem solchen zuordenbar ist und eine geringere Weite W2 als der erste Ausschnitt aufweist, so dass Rohre in dem ersten und dem zweiten Ausschnitt aufnehmbar sind. In dieser Ausgestaltung ist die Rohrklemmleiste im Querschnitt gesehen mindestens L-förmig ausgebildet, wobei die erste und die weitere Wandung auch eine im Wesentlichen gleiche Tiefe beziehungsweise Höhe aufweisen können. Es kann aber auch eine U-förmige Ausgestaltung der Rohrklemmleiste vorgesehen sein, bei der eine zweite Wandung vorgesehen ist, die ähnlich oder im Wesentlichen gleich der ersten Wandung ausgebildet ist. Auch bei einer im Wesentlichen U-förmigen Ausbildung der Rohrklemmleiste kann eine Tiefe oder Höher der ersten, zweiten und dritten Wandung im Wesentlichen gleich sein, oder aber die erste und die zweite Wandung weisen eine im Wesentlichen ähnliche Tiefe beziehungsweise Höhe auf, wohingegen die dritte Wandung im Vergleich zu diesen kürzer ausgebildet sein kann. In dieser Ausführungsform umfasst das erfindungsgemäße System mindestens eine im Wesentlichen U-förmig ausgebildete Rohrklemmleiste mit einer ersten Wandung und einer zweiten, der ersten Wandung gegenüberliegenden Wandung und einer die erste und zweite Wandung verbindenden weiteren, dritten Wandung, wobei die erste und die zweite Wandung eine Mehrzahl von zur Aufnahme von Rohren ausgebildete erste Ausschnitte aufweisen, wobei die ersten Ausschnitte in der ersten und der zweiten Wandung im Wesentlichen deckungsgleich zueinander angeordnet und von einer ersten Endkante der ersten Wandung und einer zweiten Endkante der zweiten Wandung ausgehend in diesen ausgebildet sind, wobei mindestens einem ersten Ausschnitt in der ersten und/oder in der zweiten Wandung eine erste Ausnehmung zugeordnet ist, die zwischen dem ersten Ausschnitt und der weiteren, dritten Wandung oder im Wesentlichen unmittelbar angrenzend an die weitere, dritte Wandung oder zwischen ersten Ausschnitten in der ersten und/oder der zweiten Wandung angeordnet ist, wobei das System weiterhin mindestens ein Mittel zur Reduzierung einer Weite W1 eines ersten Ausschnitts der Rohrklemmleiste mit einem Eingriffschenkel, der in der ersten Ausnehmung anordenbar ist, und mit einem Reduzierschenkel, wobei Eingriffschenkel und Reduzierschenkel im Wesentlichen L-förmig zueinander ausgebildet sind, umfasst, wobei der Reduzierschenkel eine Vorderkante aufweist, von der ausgehend ein zweiter Ausschnitt ausgebildet ist, der im Wesentlichen einem ersten Ausschnitt der Rohrklemmleiste nachgebildet und einem solchen zuordenbar ist und eine geringere Weite W2 als der erste Ausschnitt aufweist, so dass Rohre in dem ersten und dem zweiten Ausschnitt aufnehmbar sind. Die Aufnahme erfolgt dabei in aller Regel in Form einer Klemmung zumindest im zweiten Ausschnitt des Mittels zur Reduzierung. In dieser Ausführungsform entspricht die weitere Wandung bei im Wesentlichen L-förmiger Ausgestaltung der Rohrklemmleiste der dritten Wandung bei im Wesentlichen U-förmiger Ausbildung derselben und kann damit angesprochen werden als den Boden oder den Unterstrich des U bildende Wandung.

Durch das erfindungsgemäße System umfassend mindestens eine Rohrklemmleiste und mindestens ein Mittel zur Reduzierung einer Weite W1 eines ersten Ausschnittes der Rohrklemmleiste können ohne Zuhilfenahme sonstiger Hilfsmittel sicher Leerrohre unterschiedlichen Durchmessers in erste Ausschnitte einer Rohrklemmleiste und einem zweiten Ausschnitt des Mittels zur Reduzierung angeordnet, und insbesondere zumindest in den zweiten Ausschnitten geklemmt werden. Da die Rohrklemmleiste für die Mittel zur Reduzierung Ausnehmungen aufweist, sind die Mittel zur Reduzierung auch sicher im Verhältnis zur Rohrklemmleiste montiert und positioniert, so dass anschließend ein Leerrohr mit einem geringeren Außendurchmesser, als dieser in Hinblick auf die ersten Ausschnitte in der ersten und/oder der zweiten Wandung der Rohrklemmleiste klemmbar aufnehmbar ist, gleichwohl sicher mit dem erfindungsgemäßen System in der Rohrklemmleiste verklemmt werden, da ja die Weite W2 der zweiten Ausschnitte des Mittels zur Reduzierung geringer ist als die Weite W1 der ersten Ausschnitte der Rohrklemmleiste. Dabei sind vorteilhafterweise Mittel zur Reduzierung mit unterschiedlichen Weiten W2 vom System umfasst, um auch für mehrere Leerrohre mit unterschiedlichen Außendurchmessern eine Klemmung zur Verfügung zu stellen.

Die zweiten Ausschnitte sind den ersten Ausschnitten nachgebildet, das heißt, diese weisen eine gleiche geometrische Ausbildung auf wie die ersten Ausschnitte, allerdings mit einer geringeren Weite W2 als einer Weite W1 der ersten Ausschnitte. Die im Vergleich zu der Weite W1 der ersten Ausschnitte geringere Weite W2 der zweiten Ausschnitte hat die Funktion, eine Klemmung eines Leerrohres durch das Mittel zur Reduzierung in dem erfindungsgemäßen System zur Verfügung zu stellen. Die Weiten W1 und W2 sind bestimmt als die maximalen Weiten der ersten Ausschnitte, bestimmt in Längsrichtung der Rohrklemmleiste im Bereich der ersten Endkante der ersten Wandung und gegebenenfalls der zweiten Endkante der zweiten Wandung, als auch durch eine maximale Weite des zweiten Ausschnittes, gemessen im Bereich der Vorderkante des Mittels zur Reduzierung. Dadurch, dass die Weite W2 des zweiten Ausschnittes des Mittels zur Reduzierung geringer ist als die Weite W1 des ersten Ausschnittes der Rohrklemmleiste in der ersten Wandung und/oder zweiten Wandung, wird, in einem Querschnitt gesehen, bei montierten Mittel zur Reduzierung in der Rohrklemmleiste im Bereich des ersten und zweiten Ausschnittes ein Überstand Ü generiert. Dieser Überstand, der durch die geringere Weite W2 des zweiten Ausschnittes des Mittels zur Reduzierung erzeugt wird, kann dabei beispielsweise derart ausgelegt sein, dass bei Auslegung der ersten Ausschnitte in der ersten/oder zweiten Wandung der Rohrklemmleiste zur Aufnahme von Leerrohren durch Klemmung Leerrohre mit einem Außendurchmesser von 12 mm eine Aufnahme von Leerrohren mit einem Außendurchmesser von 10 mm, 8 mm, 7 mm oder mit sonstigen Werten für den Außendurchmesser, soweit diese geringer sind als die Weite W1 der ersten Ausschnitte in der ersten und/oder zweiten Wandung der Rohrklemmleiste, sicher verklemmt werden.

In einer Ausführungsform kann vorgesehen sein, dass lediglich in der ersten Wandung bei im Wesentlichen L- oder U-förmiger Ausgestaltung der Rohrklemmleiste der Rohrklemmleiste eine Ausnehmung vorgesehen ist. In diesem Fall ist die erste Wandung bevorzugt eine solche, die bei Montage in einem Verteilerschrank in Richtung auf ein Dach desselben ausgerichtet ist. In einer weiteren Ausführungsform kann aber auch vorgesehen sein, dass in der ersten und der zweiten Wandung bei im Wesentlichen U-förmiger Ausgestaltung der Rohrklemmleiste jeweils eine Ausnehmung vorgesehen ist. Besonders bevorzugt weisen die erste Wandung und die zweite Wandung der Rohrklemmleiste bei im Wesentlichen U-förmiger Ausgestaltung der Rohrklemmleiste, zugeordnet mindestens einem ersten Ausschnitt, die Ausnehmung auf, die im Wesentlichen gegenüberliegend in der ersten Wandung und in der zweiten Wandung angeordnet sind, wobei das mindestens eine Mittel zur Reduzierung mit seinem Eingriffschenkel durch die Ausnehmung in der ersten Wandung und die Ausnehmung in der zweiten Wandung durchgreifen kann.

Besonders bevorzugt sind die Ausnehmungen in der ersten Wandung und der zweiten Wandung als schlitzförmige Öffnungen in denselben vorgesehen. Dabei kann vorgesehen sein, dass die Ausnehmung im Bereich zwischen dem ersten Ausschnitt in der ersten Wandung und/oder zweiten Wandung sowie der weiteren beziehungsweise dritten Wandung angeordnet ist, mithin beabstandet von der weiteren beziehungsweise dritten Wandung. Alternativ kann aber auch vorgesehen sein, dass die Ausnehmung zwischen dem ersten Ausschnitt und der weiteren beziehungsweise dritten Wandung und dabei unmittelbar angrenzend an die weitere beziehungsweise dritte Wandung in der ersten und/oder der zweiten Wandung angeordnet ist. In diesem Fall kann die Anordnung der Ausnehmung auch derart beschrieben werden, dass diese im Biegeübergangsbereich zwischen erster Wandung und weiterer beziehungsweise dritter Wandung beziehungsweise zweiter Wandung und dritter Wandung angeordnet ist. Üblicherweise werden Rohrklemmleisten mit L- oder U-förmigem Profil durch Biegen eines Metallbleches hergestellt, wobei in den Übergängen zwischen der ersten Wandung und weiteren beziehungsweise dritten Wandung beziehungsweise zweiten Wandung und dritten Wandung gerundete Biegeübergangsbereiche entstehen.

Der Vorteil der vorstehend beschriebenen bevorzugten Ausbildung mit Vorsehung von insbesondere schlitzförmigen Ausnehmungen in der ersten und der zweiten Wandung ist, dass bei entsprechender Ausbildung des Eingriffsschenkels des Mittels zur Reduzierung in Hinblick auf dessen Abmessungen dieser durch insbesondere kongruent einander zugeordnete Ausnehmungen in der ersten Wandung und in der zweiten Wandung durchgreift und dadurch diesem ein sicherer Sitz vermittelt wird und insbesondere eine eineindeutige Positionierung desselben im Verhältnis zur Rohrklemmleiste und damit des zweiten Ausschnittes des Mittels zur Reduzierung zum ersten Ausschnitt der in der ersten Wandung und/oder zweiten Wandung der Rohrklemmleiste erfolgt.

In einer bevorzugten Ausführungsform ist die Vorderkante des Reduzierschenkels des Mittels zur Reduzierung im Wesentlichen bündig mit der ersten oder zweiten Endkante der ersten oder zweiten Wandung bei Anordnung des Mittels zur Reduzierung in der Ausnehmung oder den Ausnehmungen in der ersten und/oder zweiten Wandung ausgebildet. Hierdurch wird im montierten Zustand im Bereich der Vorderkante des Mittels zur Reduzierung beziehungsweise der Endkanten der Rohrklemmleiste eine Bildung von Vorsprüngen oder ähnlichem verhindert, die eine Montage erschweren oder auch zu Verletzungen führen könnten. Auch eine rückspringende Ausbildung der zweiten Ausschnitte im Vergleich zu den ersten Ausschnitten ist möglich.

Weiter vorteilhafterweise ist in einer Längsrichtung der Rohrklemmleiste gesehen eine Breite B1 des Eingriffschenkels des Mittels zur Reduzierung kleiner als eine Breite B2 des Reduzierschenkels. Hierdurch kann Material eingespart und das erfindungsgemäße System kostengünstiger hergestellt werden. Bevorzugt ist die Ausnehmung schlitzförmig ausgebildet. Dabei ist bevorzugt die Ausnehmung, so diese in der ersten Wandung und der zweiten Wandung vorgesehen ist, jeweils schlitzförmig ausgebildet, bevorzugt schlitzförmig mit einer identischen Geometrie. Die schlitzförmige Ausnehmung kann auch als Öffnung in der ersten oder zweiten Wandung beziehungsweise im Biegeübergangsbereich zwischen erster Wandung und der weiteren beziehungsweise dritten Wandung oder zweiter Wandung und dritter Wandung angesprochen werden.

In einer weiter bevorzugten Ausführungsform ist der Eingriffschenkel in seiner Außenkontur der Ausnehmung angeformt. Hierdurch kann eine passgenaue Montage des Mittels zur Reduzierung in den Ausnehmungen der Rohrklemmleiste erfolgen. Insbesondere kann hierdurch auch den Mitteln zur Reduzierung ein hinreichend fester Sitz in der Ausnehmung oder den Ausnehmungen in der Rohrklemmleiste vermittelt sein. Bevorzugt weist die Außenkontur des Eingriffsschenkels damit eine im Querschnitt gesehen schlitzförmige Ausbildung auf, die einer Innenkontur der Ausnehmung angeformt ist, dieser also folgt. Dabei ist die Außenkontur des Eingriffsschenkels bevorzugt baulich minimal kleiner ausgebildet als die Innenkontur der Ausnehmung, um ein Einsetzen in diese zu erleichtern.

In einer weiter bevorzugten Ausführungsform weist die Rohrklemmleiste mindestens eine erste und eine zweite Ausnehmung auf, wobei die erste Ausnehmung zwischen dem ersten Ausschnitt und der weiteren beziehungsweise dritten Wandung oder im Wesentlichen unmittelbar angrenzend an die weitere beziehungsweise dritte Wandung angeordnet ist, und wobei die zweite Ausnehmung im Wesentlichen rechtwinklig zu der ersten Ausnehmung zwischen ersten Ausschnitten in der ersten und/oder zweiten Wandung angeordnet ist. Hierdurch ist es möglich, beispielweise nach Anordnung von Leerrohren in dem ersten Ausschnitt in der ersten Wandung und/oder zweiten Wandung der Profilklemmleiste eine Klemmung durch nachträgliche Montage und Einsatz eines Mittels zur Reduzierung in die erste und/oder zweite Ausnehmung vorzunehmen. Die zweite, aber auch die erste Ausnehmung kann auch dafür vorgesehen sein, gegebenenfalls sonstige Hilfsmittel des erfindungsgemäßen Sets, wie insbesondere Fixiermittel, anzuordnen nach erfolgter Anordnung von Leerrohren und Klemmung derselben im zweiten Ausschnitt des Mittels zur Reduzierung und gegebenenfalls in einem ersten Ausschnitt in der ersten Wandung und/oder zweiten Wandung der Rohrklemmleiste. Dabei kann die zweite Ausnehmung ausgebildet sein wie die erste Ausnehmung, bevorzugt schlitzförmig, und bevorzugt im Wesentlichen gleich weit beabstandet von und zwischen zwei ersten Ausschnitten in der ersten Wandung und/oder zweiten Wandung. Weiter bevorzugt sind die erste und die zweite Ausnehmung im Wesentlichen identisch in ihrer Form, bevorzugt schlitzförmig, und ihren Abmessungen ausgebildet. Es ist alternativ aber auch möglich, dass die erste und die zweite Ausnehmung im Wesentlichen identisch in ihrer Form, bevorzugt schlitzförmig, aber in ihren Abmessungen unterschiedlich ausgebildet sind, insbesondere dann, wenn unterschiedliche Mittel mit der Rohrklemmleiste verbunden werden sollen, wie insbesondere Mittel zur Reduzierung und Fixiermittel.

In einer weiter bevorzugten Ausführungsform umfasst das erfindungsgemäße Set mindestens ein Fixiermittel, um ein Herausrutschen eines Rohres aus dem ersten und/oder zweiten Ausschnitt zu vermeiden. Dies ist insbesondere vorteilhaft, wenn das betreffende Rohr, insbesondere Leerrohr in einem Verteilerkasten, unter Spannung steht, so dass mit einem Entfernen aus dem Klemmsitz gerechnet werden kann. Dies kann beispielsweise auch erfolgen, wenn das Gehäuse, in welchem die Rohrklemmleiste angeordnet ist, Vibrationen oder ähnlichem ausgesetzt ist. Dabei kann das Fixiermittel, welches insbesondere als Fixierklammer ausgebildet ist, ähnlich wie das Mittel zur Reduzierung in den ersten und/oder zweiten Ausnehmungen in der ersten Wandung und/oder zweiten Wandung der Rohrklemmleiste angeordnet sein. Bevorzugt ist das Fixiermittel L-förmig ausgebildet mit einem ersten Schenkel und einem zweiten Schenkel, wobei der erste Schenkel in eine Ausnehmung, insbesondere eine erste oder eine zweite Ausnehmung, eingreifbar ist. Wie bereits vorstehend im Zusammenhang mit dem Mittel zur Reduzierung beschrieben, ist dabei eine Außenkontur des ersten Schenkels einer Innenkontur einer ersten Ausnehmung oder zweiten Ausnehmung angeformt, folgt dieser also nach, und ist insbesondere baulich nur geringfügig kleiner ausgebildet als die Innenkontur der ersten und der zweiten Ausnehmung.

Eine Montageperson hat die Wahl, das Mittel zur Reduzierung und/oder das Fixiermittel in erste Ausnehmungen oder zweite Ausnehmungen einzusetzen. Dabei kann die Montageperson auch vorsehen, dass beispielsweise sowohl ein Mittel zur Reduzierung als auch ein Fixiermittel einem einzigen ersten Ausschnitt in der ersten Wandung und/oder zweiten Wandung der Rohrklemmleiste zugeordnet ist. In diesem Fall erfährt ein dort angeordnetes Leerrohr sowohl eine Klemmung durch das Mittel zur Reduzierung der Weite W1 des ersten Ausschnittes in der ersten Wandung und/oder zweiten Wandung auf eine Weite W2 des zweiten Ausschnittes des Mittels zur Reduzierung, als auch eine Fixierung durch das Fixiermittel, so dass ein Herausspringen oder ähnliches des Leerrohres aus dem oder den ersten Ausschnitten in der ersten und/oder zweiten Wandung vermieden ist.

Bevorzugt ist der zweite Schenkel des Fixiermittels plattenförmig mit einer Stirnfläche und einer ersten und einer zweiten Seitenfläche ausgebildet und weist ausgehend von der Stirnfläche oder der ersten oder zweiten Seitenfläche einen dritten Ausschnitt auf, der über einem ersten und/oder einem zweiten Ausschnitt anordenbar ist. Hierdurch lassen sich die vorstehend beschriebenen Anordnungsmöglichkeiten des Fixiermittels, welches als Fixierklammer angesprochen werden kann, im Verhältnis zu den ersten Ausschnitten in der ersten und/oder zweiten Wandung der Rohrklemmleiste als auch dem zweiten Ausschnitt des Mittels zur Reduzierung umsetzen. Bevorzugt ist eine Weite des dritten Ausschnitts kleiner als die Weite W1 der ersten Ausschnitte.

Die vorstehend wiedergegebenen Vorteile und Ausgestaltungen werden anhand der nachfolgenden Figuren nähergehend erläutert. Die in den Figuren dargestellten Ausführungsformen sind jedoch nicht beschränkend auszulegen, vielmehr können die dort beschriebenen Merkmale untereinander oder mit den beschriebenen Merkmalen zu weiteren Ausgestaltungen kombiniert werden. Insbesondere ist darauf hinzuweisen, dass in der nachfolgenden Figurenbeschreibung ausschließlich erste Ausnehmungen beispielhaft gezeigt sind, und keine zweiten Ausnehmungen. Die ersten Ausnehmungen sind einem ersten Ausschnitt in der ersten und/oder in der zweiten Wandung zugeordnet und zwischen dem ersten Ausschnitt und der dritten Wandung oder im Wesentlichen unmittelbar angrenzend an die weitere, dritte Wandung angeordnet. Dabei ist die Rohrklemmleiste im Wesentlichen U-förmig im Querschnitt ausgebildet mit einer ersten, zweiten und dritten Wandung, wobei die erste und die zweite Wandung eine im Wesentlichen ähnliche Tiefe beziehungsweise Höhe haben, wohingegen die dritte Wandung im Vergleich kürzer ausgebildet ist. Die Rohrklemmleiste kann aber auch im Querschnitt gesehen L-förmig ausgebildet sein mit dann einer ersten und einer weiteren Wandung, wie oben beschrieben. Die zweiten Ausnehmungen können zusätzlich zu den ersten Ausnehmungen in einem etwa rechten Winkel zu diesen zwischen den jeweiligen ersten Ausnehmungen in einer ersten Wandung und/oder in einer zweiten Wandung der Rohrklemmleiste angeordnet sein. Des Weiteren sei darauf hingewiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1a: eine erste Ausführungsform einer Rohrklemmleiste für das erfindungsgemäße System in einer Vorderansicht;
- Fig. 1b: die Rohrklemmleiste gemäß Fig. 1a in einer Draufsicht;
- Fig. 1c: eine Seitenansicht der Rohrklemmleiste gemäß Fig. 1a;
- Fig. 1d: eine perspektivische Ansicht der Rohrklemmleiste gemäß Fig. 1a von vorne;
- Fig. 1e: eine perspektivische Ansicht der Rohrklemmleiste gemäß Fig. 1a von hinten;
- Fig. 2a: eine zweite Ausführungsform einer Rohrklemmleiste für das erfindungsgemäße System;
- Fig. 2b: die Rohrklemmleiste gemäß Fig. 2a in einer Draufsicht;
- Fig. 2c: eine perspektivische Ansicht der Rohrklemmleiste gemäß Fig. 2a von vorne;
- Fig. 2d: eine perspektivische Ansicht der Rohrklemmleiste gemäß Fig. 2a von hinten;
- Fig. 3a: eine perspektivische Ansicht eines Mittels zur Reduzierung für das erfindungsgemäße System von vorne:
- Fig 3b: eine perspektivische Ansicht des Mittels zur Reduzierung gemäß Fig. 3a von hinten;
- Fig. 3c: eine Seitenansicht des Mittels zur Reduzierung gemäß Fig. Fig 3a;
- Fig. 3d: eine Draufsicht auf das Mittel zur Reduzierung gemäß Fig. 3a;
- Fig. 4a: eine perspektivische Ansicht eines Fixiermittels für das erfindungsgemäße System von vorne;
- Fig. 4b: das Fixiermittel gemäß Fig. 4a in einer perspektivischen Ansicht um 90° gedreht;
- Fig. 4c: eine Draufsicht auf das Fixiermittel gemäß Fig. 4a;
- Fig. 4d: eine Seitenansicht des Fixiermittels gemäß Fig. 4a;
- Fig. 5a: ein erfindungsgemäßes System mit einer Rohrklemmleiste und einem montierten Mittel zur Reduzierung, teilgeschnitten, in einer perspektivischen Ansicht;
- Fig. 5b: eine seitliche Schnittansicht des erfindungsgemäßen Systems gemäß Fig. 5a;
- Fig. 5c: eine perspektivische Ansicht eines erfindungsgemäßen Systems mit montiertem Fixiermittel, teilgeschnitten;
- Fig. 5d: eine seitliche Schnittansicht des Systems gemäß Fig. 5c; und
- Fig. 5e: das erfindungsgemäße System mit montiertem Mittel zur Reduzierung und Fixiermittel gemäß den Fig. 5a bis 5d.

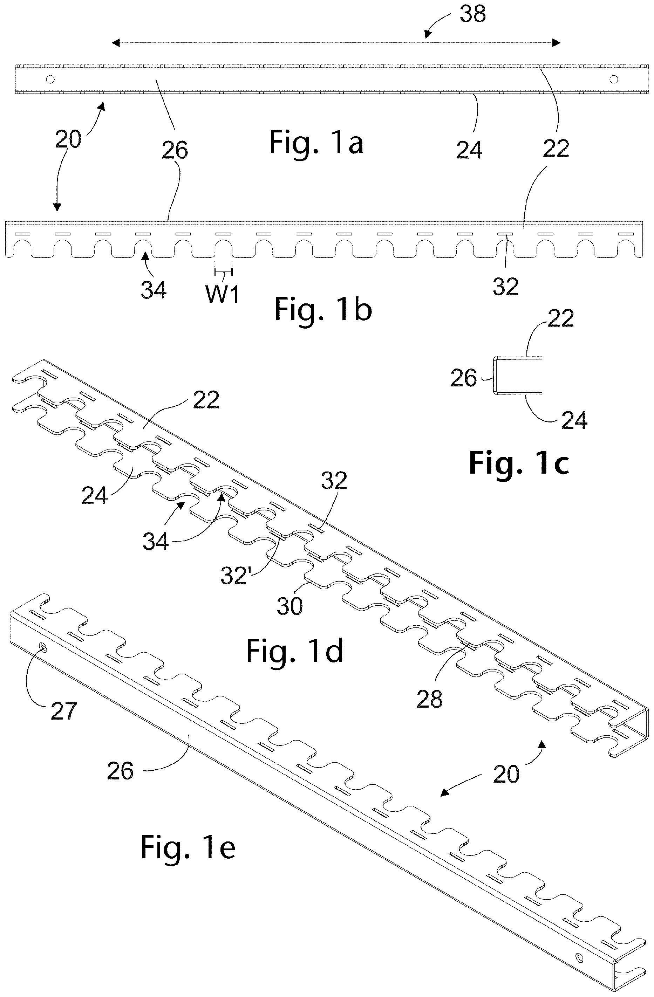

Fig. 1a zeigt eine insgesamt mit dem Bezugszeichen 20 bezeichnete Rohrklemmleiste in einer ersten Ausführungsform und deren Erstreckung in einer Längsrichtung 38. Die Rohrklemmleiste 20 weist eine erste Wandung 22, eine zweite Wandung 24 und eine diese verbindende dritte Wandung 26 auf. Der Bereich der Verbindung kann als Biegeübergangsbereich angesprochen werden. Sowohl in der ersten Wandung 22 als auch in der zweiten Wandung 24 sind erste Ausschnitte 34 deckungsgleich und in gleicher Geometrie und Baugröße ausgebildet. Im Bereich zwischen dem ersten Ausschnitt 34 und der dritten Wandung 26 sind schlitzförmige Ausnehmungen 32 in der ersten Wandung 22 und schlitzförmige Ausnehmungen 32' in der zweiten Wandung 24 (siehe Fig. 1d) ausgebildet. Die Rohrklemmleiste 20 ist, wie Fig. 1c entnehmbar ist, U-förmig ausgebildet. In der perspektivischen Ansicht gemäß Fig. 1d sind die deckungsgleichen Anordnungen der ersten Ausnehmung 32 in der ersten Wandung 22 und der ersten Ausnehmung 32' in der zweiten Wandung 24 zu entnehmen und ebenso, dass die ersten Ausnehmungen 32, 32' einem jeden Ausschnitt 34 in der ersten Wandung 22 und der zweiten Wandung 24 zugeordnet sind. Fig. 1e zeigt in der perspektivischen Ansicht von hinten Befestigungsöffnungen 27, mittels welcher die Rohrklemmleiste 20 in einem Gehäuse, beispielsweise einem Netzverteilerschrank, an einer vorgesehenen Halterung oder Rückwand oder ähnlichem montiert werden kann.

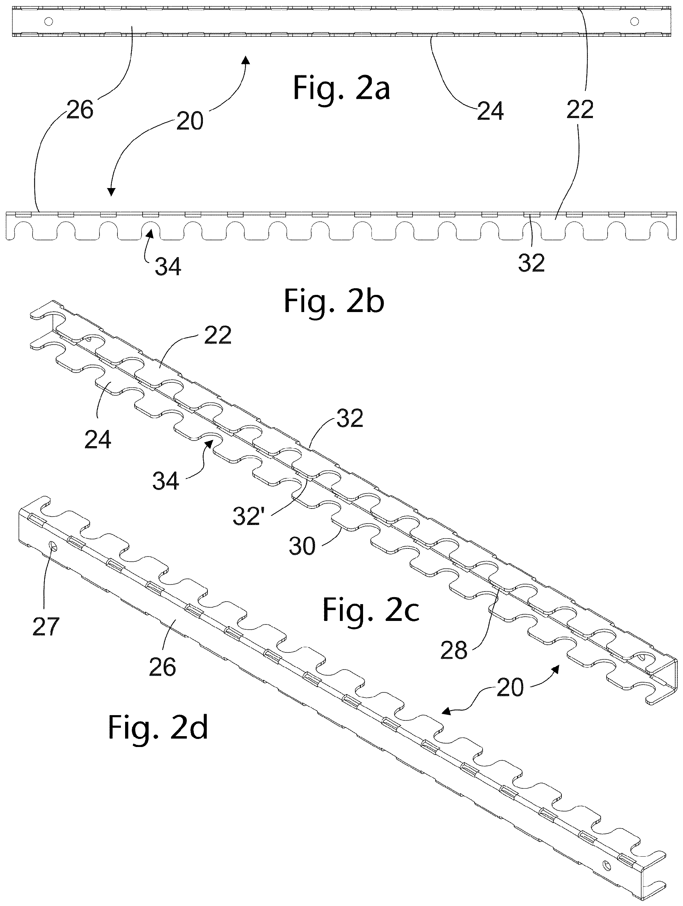

Fig. 2a zeigt eine zweite Ausführungsform der Rohrklemmleiste 20 in einer Ansicht wie in Fig. 1a für die erste Ausführungsform. Fig. 2b zeigt eine Draufsicht der zweiten Ausführungsform der Rohrklemmleiste 20 entsprechend der Fig. 1b der ersten Ausführungsform, Fig. 2c zeigt eine perspektivische Ansicht von vorne der zweiten Ausführungsform der Rohrklemmleiste 20 entsprechend der Fig. 1d der ersten Ausführungsform und Fig. 2d zeigt in einer perspektivischen Ansicht von hinten die zweite Ausführungsform entsprechend der Fig. 1e der ersten Ausführungsform. Im Unterschied zur ersten Ausführungsform gemäß den Fig. 1a bis 1e ist in der zweiten Ausführungsform der Rohrklemmleiste 20 gemäß den Fig. 2a bis 2d die erste Ausnehmung 32 in der ersten Wandung 22 beziehungsweise die erste Ausnehmung 32' in der zweiten Wandung 24 nicht im Bereich zwischen den ersten Ausschnitten 34 und der dritten Wandung 26 angeordnet, sondern unmittelbar angrenzend an die dritte Wandung 26 im Biegeübergangsbereich, das heißt, im Übergang von der ersten Wandung 22 beziehungsweise der zweiten Wandung 24 in die dritte Wandung 26.

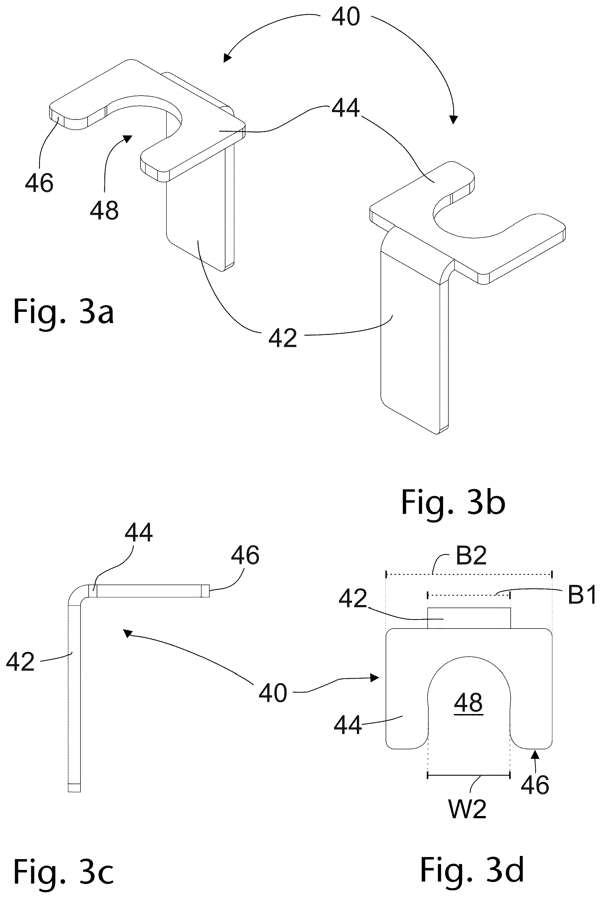

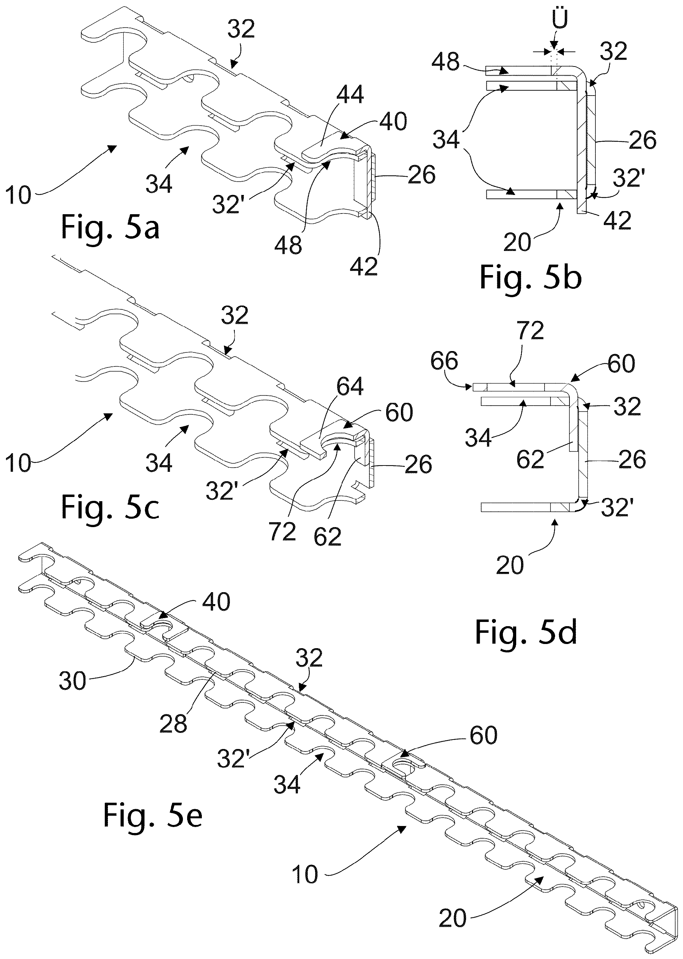

Fig. 3a bis 3d zeigen das Mittel zur Reduzierung 40, welches im erfindungsgemäßen System eingesetzt ist. Fig. 3a zeigt das Mittel zur Reduzierung 40 mit dem Eingriffschenkel 42 und dem Reduzierschenkel 44. Der Reduzierschenkel 44 weist ausgehend von einer Vorderkante 46 einen zweiten Ausschnitt 48 auf, welcher geometrisch angeformt ist an den ersten Ausschnitt gemäß der ersten und zweiten Ausführungsform der Rohrklemmleiste 20 gemäß den Fig. 1a bis 2d. Der Reduzierschenkel 44 mit dem zweiten Ausschnitt 48 ist plattenförmig ausgebildet und kommt bei Montage auf einer Rohrklemmleiste 20 auf einer Oberfläche der ersten Wandung 22 desselben zu liegen (siehe Fig. 5a und 5b). Der Eingriffschenkel 42 weist eine Breite B1 auf, welche geringer ist als eine Breite B2 des Reduzierschenkels 44. Die Breite B2 des Reduzierschenkels 44 wird bestimmt durch die Längskanten des Reduzierschenkels 44, wie in Fig. 3d gezeigt. Die Breite B1 des Eingriffschenkels 42 wird bestimmt durch dessen Seitenkanten, wie Fig. 3d zu entnehmen ist. Der zweite Ausschnitt 48 weist eine Weite W2 auf, gemessen wie in Fig. 3d gezeigt. Diese Weite W2 des zweiten Ausschnittes 48 ist geringer als eine Weite W1 des ersten Ausschnittes 34 in der Rohrklemmleiste 20, die wie in Fig. 1b bestimmbar ist.

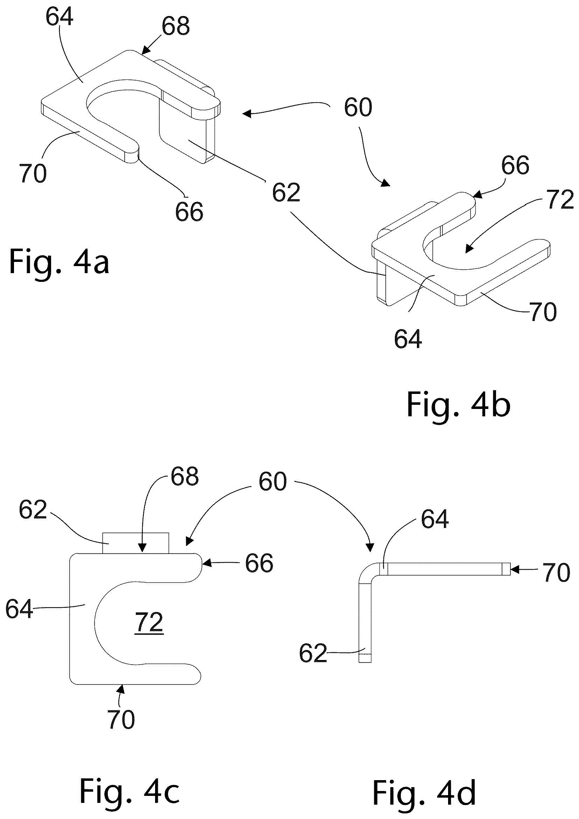

Die Fig. 4a bis 4d zeigen ein Fixiermittel, welches als Fixierklammer ausgebildet ist, welches in dem erfindungsgemäßen System eingesetzt werden kann. Ähnlich wie das Mittel zur Reduzierung 40 gemäß den Fig. 3a bis 3d ist das Fixiermittel 60 L-förmig ausgebildet mit einem ersten Schenkel 62 und einem zweiten Schenkel 64. Der zweite Schenkel 64 ist plattenförmig ausgebildet und kann damit zur Auflage auf einer Oberfläche einer ersten Wandung 22 oder zweiten Wandung 24 gelangen. Der zweite Schenkel 64 weist eine erste Seitenfläche 48 und eine zweite Seitenfläche 70 auf. Ein dritter Ausschnitt 72 ist ausgehend von einer Stirnfläche 66 des zweiten Schenkels 64 ausgebildet. Eine Weite des dritten Ausschnittes 72 ist im Wesentlichen gleich groß wie ein Außendurchmesser eines zu fixierenden Leerrohres. Der Schenkel 62 ist, wie Fig. 4d entnommen werden kann, erheblich kürzer ausgebildet als der Eingriffschenkel 42 des Mittels zur Reduzierung 40 gemäß den Fig. 3a bis 3c. Damit weist der erste Schenkel 62 eine Länge auf, mit welcher er in diesem Ausführungsbeispiel nur durch eine Ausnehmung 32 oder 32' und nicht durch beide erste Ausnehmungen 32 beziehungsweise 32' durchgreifbar ist. Ebenso wie der erste Schenkel 42 des Mittels zur Reduzierung 40 weist der erste Schenkel 62 des Fixiermittels 60 eine Außenkontur auf, die einer Innenkontur der ersten Ausnehmungen 32 beziehungsweise 32' gemäß den Fig. 1a bis 2d angeformt ist. Dabei weisen die Außenkonturen des ersten Schenkels 62 des Fixiermittels 60 und des Eingriffschenkels 42 des Mittels zur Reduzierung 40 eine Außenkontur auf, die der Innenkontur der ersten Ausnehmung 32 beziehungsweise 32' der Rohrklemmleiste 20 folgen und dabei baulich geringfügig kleiner ausgebildet sind, um ein Einsetzen des Mittels zur Reduzierung 40 als auch des Fixiermittels 60 in die ersten Ausnehmungen 32 beziehungsweise 32' zu ermöglichen.

Fig. 5a zeigt in einer perspektivischen Ansicht, teilgeschnitten, ein erfindungsgemäßes System 10 mit einer Rohrklemmleiste 20 gemäß der zweiten Ausführungsform, in welchem das Mittel zur Reduzierung 40 in erste Ausnehmungen 32 und 32' aufgenommen ist. Ebenso könnte auch eine Rohrklemmleiste 20 gemäß der ersten Ausführungsform eingesetzt werden. Fig. 4b zeigt die Bildung eines Überstandes Ü durch das Mittel zur Reduzierung 40, in dem der zweite Ausschnitt 48 desselben eine geringere Tiefe aufweist als der erste Ausschnitt 34. Die Tiefe entspricht im Wesentlichen der Weite W2 des zweiten Ausschnittes 48 beziehungsweise der Weite W1 der ersten Ausschnitte 34. In der ersten Wandung 22 und der zweiten Wandung 24 der Rohrklemmleiste 20 kann damit ein Leerrohr mit einem geringeren Außendurchmesser als einer Weite W1 der ersten Ausschnitte 34 durch das Mittel zur Reduzierung 40 und die zweiten Ausschnitte 48 sicher in der Rohrklemmleiste 20 angeordnet, geführt und geklemmt werden. Der Eingriffschenkel 42 des Mittels zur Reduzierung 40 durchgreift dabei erste Ausnehmungen 32 und 32', die in den Biegeübergangsbereichen zwischen erster Wandung 22 und zweiter Wandung 24 sowie dritter Wandung 26 angeordnet sind.

Hierdurch ist eine sichere Positionierung des Mittels zur Reduzierung 40 in der Rohrklemmleiste 20 und eine gute Zuordnung des zweiten Ausschnittes 48 des Mittels zur Reduzierung 40 zum ersten Ausschnitt 34 der Rohrklemmleiste 20 erzielbar.

Fig. 5c und 5d zeigen das erfindungsgemäße System 10, diesmal jedoch mit montiertem Fixiermittel 60. Dieses ist in diesem Fall ebenso wie das Mittel zur Reduzierung 40 gemäß den Fig. 4a und 4b in ersten Ausnehmungen 32 aufgenommen, die in einem Biegeübergangsbereich zwischen erster Wandung 22 und dritter Wandung 26 angeordnet sind. Allerdings erfolgt keine Anordnung des Fixiermittels 60 in einer ersten Ausnehmung 32' in einer zweiten Wandung 24 der Rohrklemmleiste 20, da der erste Schenkel 62 des Fixiermittels 60 kürzer ausgebildet ist als der Eingriffschenkel 42 des Mittels zur Reduzierung 40, wie in den Fig. 5a und 5b gezeigt. Dies ist besonders gut Fig. 5d zu entnehmen. Fig. 5d ist auch zu entnehmen, dass durch den dritten Ausschnitt 72 ein hier nicht näher definierter Überstand im Verhältnis zum ersten Ausschnitt 34 definiert wird, so dass die Weite des dritten Ausschnittes 72 geringer ist als eine Tiefe des ersten Ausschnittes 34. Hierdurch kann eine sichere Fixierung eines durch den ersten Ausschnitt 34 der Rohrklemmleiste 20 geführten Leerrohres mittels des Fixiermittels 60 gelingen, so dass ein solches Leerrohr nicht mehr nach vorne aus dem ersten Ausschnitt 32 der Rohrklemmleiste 20 sich herausdrücken kann oder herausgedrückt wird.

Fig. 5e zeigt das erfindungsgemäße System 10 mit montiertem Mittel zur Reduzierung 40 als auch Fixiermittel 60 in einer perspektivischen Ansicht. Aufgrund der Anordnung in der ersten Ausnehmung 32 der ersten Wandung 22 der Rohrklemmleiste 20 in einem Biegeübergangsbereich zwischen erster Wandung 22 und dritter Wandung 26 ist der zweite Schenkel 64 des Fixiermittels 60 um 90° gedreht, bezogen auf dessen dritten Ausschnitt 72 im Vergleich zum Mittel zur Reduzierung 40 und dessen zweitem Ausschnitt 48.

## Patentansprüche

1. System (10) zur Klemmung von Rohren in Verteilerschränken, insbesondere im Bereich der Telekommunikation, umfassend mindestens eine Rohrklemmleiste (20) mit einer ersten Wandung (22) und einer mit der ersten Wandung (22) im Wesentlichen rechtwinklig verbundenen weiteren Wandung (26), wobei die erste Wandung (22) eine Mehrzahl von zur Aufnahme von Rohren ausgebildete erste Ausschnitte (34) aufweiset, wobei die ersten Ausschnitte (34) von einer ersten Endkante (28) der ersten Wandung (22) ausgehend in dieser ausgebildet sind, wobei mindestens einem ersten Ausschnitt (34) in der ersten Wandung (22) eine Ausnehmung (32, 32') zugeordnet ist, die zwischen dem ersten Ausschnitt (34) und der weiteren Wandung (26) oder im Wesentlichen unmittelbar angrenzend an die weitere Wandung (26) oder zwischen ersten Ausschnitten (34) in der ersten Wandung (22) angeordnet ist, das System (10) weiterhin umfassend mindestens ein Mittel zur Reduzierung (40) einer Weite W1 eines ersten Ausschnitts (34) der Rohrklemmleiste (10) mit einem Eingriffschenkel (42), der in der Ausnehmung (32, 32') anordenbar ist, und mit einem Reduzierschenkel (44), wobei Eingriffschenkel (42) und Reduzierschenkel (44) im Wesentlichen L-förmig zueinander ausgebildet sind, wobei der Reduzierschenkel (44) eine Vorderkante (46) aufweist, von der ausgehend ein zweiter Ausschnitt (48) ausgebildet ist, der im Wesentlichen einem ersten Ausschnitt (34) der Rohrklemmleiste (20) nachgebildet und einem solchen zuordenbar ist und eine geringere Weite W2 als der erste Ausschnitt (34) aufweist, so dass Rohre in dem ersten und dem zweiten Ausschnitt (34, 48) aufnehmbar sind.

2. System (10) zur Klemmung von Rohren in Verteilerschränken, insbesondere im Bereich der Telekommunikation, umfassend mindestens eine im Wesentlichen U-förmig ausgebildete Rohrklemmleiste (20) mit einer ersten Wandung (22) und einer zweiten, der ersten Wandung (22) gegenüberliegenden Wandung (24) und einer die erste und zweite Wandung (22, 24) verbindenden weiteren, dritten Wandung (26), wobei die erste und die zweite Wandung (22, 24) eine Mehrzahl von zur Aufnahme von Rohren ausgebildete erste Ausschnitte (34) aufweisen, wobei die ersten Ausschnitte (34) im Wesentlichen deckungsgleich zueinander in der ersten und der zweiten Wandung (22, 24) angeordnet sind und von einer ersten Endkante (28) der ersten Wandung (22) und einer zweiten Endkante (30) der zweiten Wandung (24) ausgehend in diesen ausgebildet sind, wobei mindestens einem ersten Ausschnitt (34) in der ersten und/oder in der zweiten Wandung (22, 24) eine Ausnehmung (32, 32') zugeordnet ist, die zwischen dem ersten Ausschnitt (34) und der dritten Wandung (26) oder im Wesentlichen unmittelbar angrenzend an die weitere, dritte Wandung (26) oder zwischen ersten Ausschnitten (34) in der ersten und/oder der zweiten Wandung (22, 24) angeordnet ist, das System (10) weiterhin umfassend mindestens ein Mittel zur Reduzierung (40) einer Weite W1 eines ersten Ausschnitts (34) der Rohrklemmleiste (10) mit einem Eingriffschenkel (42), der in der Ausnehmung (32, 32') anordenbar ist, und mit einem Reduzierschenkel (44), wobei Eingriffschenkel (42) und Reduzierschenkel (44) im Wesentlichen L-förmig zueinander ausgebildet sind, wobei der Reduzierschenkel (44) eine Vorderkante (46) aufweist, von der ausgehend ein zweiter Ausschnitt (48) ausgebildet ist, der im Wesentlichen einem ersten Ausschnitt (34) der Rohrklemmleiste (20) nachgebildet und einem solchen zuordenbar ist und eine geringere Weite W2 als der erste Ausschnitt (34) aufweist, so dass Rohre in dem ersten und dem zweiten Ausschnitt (34, 48) aufnehmbar sind.

3. System gemäß Anspruch 2, **dadurch gekennzeichnet, dass** die erste Wandung (22) und die zweite Wandung (24) der Rohrklemmleiste (20), zugeordnet mindestens einem ersten Ausschnitt (34), die Ausnehmung (32, 32') aufweisen, die im Wesentlichen gegenüberliegend in der ersten Wandung (22) und in der zweiten Wandung (24) angeordnet sind, wobei das mindestens eine Mittel zur Reduzierung (40) mit seinem Eingriffschenkel (42) durch die Ausnehmung (32, 32') in der ersten Wandung (22) und in der zweiten Wandung (24) durchgreifen kann.

4. System gemäß einem oder mehreren der vorhergehenden Ansprüche, **dadurch gekennzeichnet, dass** die Vorderkante (46) des Reduzierschenkels (44) im Wesentlichen bündig mit der ersten oder zweiten Endkante (28, 30) der ersten oder zweiten Wandung (22, 24) bei Anordnung des Mittels zur Reduzierung (40) in der Ausnehmung (32, 32') oder den Ausnehmungen (32, 32') in der ersten und/oder zweiten Wandung (22, 24) ist.

5. System gemäß einem oder mehreren der vorhergehenden Ansprüche, **dadurch gekennzeichnet, dass** in einer Längsrichtung (38) der Rohrklemmleiste (20) gesehen eine Breite B1 des Eingriffschenkels (42) kleiner ist als eine Breite B2 des Reduzierschenkels (44).

6. System gemäß einem oder mehreren der vorhergehenden Ansprüche, **dadurch gekennzeichnet, dass** die Ausnehmung (32, 32') schlitzförmig ausgebildet ist.

7. System gemäß einem oder mehreren der vorhergehenden Ansprüche, **dadurch gekennzeichnet, dass** der Eingriffschenkel (42) in seiner Außenkontur der Ausnehmung (32, 32') angeformt ist.

8. System gemäß einem oder mehreren der vorhergehenden Ansprüche, **dadurch gekennzeichnet, dass** die Rohrklemmleiste (20) mindestens eine erste und eine zweite Ausnehmung (32, 32') aufweist, wobei die erste Ausnehmung (32, 32') zwischen dem ersten Ausschnitt (34) und der weiteren, dritten Wandung (26) oder im Wesentlichen unmittelbar angrenzend an die weitere, dritte Wandung (26) angeordnet ist, und wobei die zweite Ausnehmung im Wesentlichen rechtwinklig zu der ersten Ausnehmung (32, 32') zwischen ersten Ausschnitten (34) in der ersten und/oder zweiten Wandung (22, 24) angeordnet ist.

9. System gemäß einem oder mehreren der vorhergehenden Ansprüche, **dadurch gekennzeichnet, dass** es weiterhin mindestens ein Fixiermittel (60) umfasst, um ein Herausrutschen eines Rohres aus dem ersten und/oder zweiten Ausschnitt (34, 48) zu vermeiden.

10. System gemäß Anspruch 9, **dadurch gekennzeichnet, dass** das Fixiermittel (60) L-förmig ausgebildet ist mit einem ersten Schenkel (62) und einem zweiten Schenkel (64), wobei der erste Schenkel (62) in eine Ausnehmung (32, 32') eingreifbar ist.

11. System gemäß Anspruch 10, **dadurch gekennzeichnet, dass** der zweite Schenkel (64) plattenförmig mit einer Stirnfläche (66) und einer ersten und einer zweiten Seitenfläche (68, 70) ausgebildet ist und ausgehend von der Stirnfläche (66) oder der ersten oder zweiten Seitenfläche (68, 70) einen dritten Ausschnitt (72) aufweist, der über einem ersten und/oder einem zweiten Ausschnitt (34, 48) anordenbar ist.
